# EUROPÄISCHE PATENTSCHRIFT

(11) **EP 1 058 633 B1**
(45) Veröffentlichungstag und Bekanntmachung des Hinweises auf die Patenterteilung: **05.06.2002**
(21) Anmeldenummer: 99914475.1
(22) Anmeldetag: 04.03.1999
(51) Int. Cl.: B60R 21/16, B60R 21/20

(54) **GASSACK-MODUL**
AIRBAG MODULE
COUSSIN GONFLABLE MODULAIRE

(30) Priorität: 06.03.1998 DE 29803985 U
(43) Veröffentlichungstag der Anmeldung: 13.12.2000
(73) Patentinhaber: TRW Occupant Restraint Systems GmbH & Co. KG, 73553 Alfdorf (DE)
(72) Erfinder: ÖHLERT, Franz, D-73443 Aalen-Wasseralfingen (DE); TIETZE, Hans-Joachim, D-73540 Heubach (DE)
(74) Vertreter: Sties, Jochen, Dipl.-Ing.
(86) Internationale Anmeldenummer: EP9901416
(87) Internationale Veröffentlichungsnummer: WO9944864

(56) Entgegenhaltungen:
- EP-A- 0 816 180
- DE-A- 19 612 228
- DE-U- 29 616 904
- DE-U- 29 705 489

## Beschreibung

Die Erfindung betrifft ein Gassack-Modul für ein Fahrzeuginsassen-Rückhaltesystem, mit einem Gassack, der dafür vorgesehen ist, aus einem platzsparend zusammengefalteten Zustand in einen entfalteten Zustand überführt zu werden, in welchem er sich entlang der Innenseite wenigstens eines Teils der Seitenstruktur des Fahrzeugs erstreckt, mit wenigstens einem Abspannmittel, das dafür vorgesehen ist, den entfalteten Gassack mit der Seitenstruktur des Fahrzeugs im Bereich dessen C-Säule zu verbinden (siehe DE-A-296 16 904).

Die Erfindung betrifft weiterhin eine Fahrzeug-Innenverkleidung mit einem solchen Gassack-Modul.

Bei Gassack-Modulen der genannten Art ist ein Gassack entlang der Innenseite der Seitenstruktur des Fahrzeugs abgespannt und schützt bei einem Seitenaufprall den Kopf eines Fahrzeuginsassen vor dem seitlichen Aufprall auf die Seitenstruktur des Fahrzeuges. Die Oberkante des Gassacks ist über ihre gesamte Länge an einem Gehäuse befestigt, das entlang eines Dachholms angeordnet ist. Eine hintere untere Ecke und eine vordere untere Ecke des Gassacks sind über Abspannmittel mit der C-Säule bzw. der A-Säule des Fahrzeugs verbunden, so daß die gesamte Fläche des Gassacks abgespannt ist. Um Schutz im Bereich der C-Säule zu bieten, ist der Gassack wenigstens über einen Teilbereich der C-Säule gespannt. Das Abspannmittel verläuft im entfalteten Zustand des Gassacks von der über der C-Säule liegenden hinteren unteren Ecke des Gassacks zu einem noch weiter hinten liegenden Befestigungspunkt an der C-Säule. Während des Entfaltungsvorgangs tritt das Abspannmittel und/oder der Gassack durch eine an der C-Säule vorgesehene Fahrzeugsäulenverkleidung hindurch, so daß diese entweder zweiteilig aufgebaut oder mit einer Reißlinie versehen ist, die während der Entfaltung des Gassacks durch den sich entfaltenden Gassack und das hieran befestigte Abspannmittel aufgerissen wird. Dadurch kann der Bereich um die hintere, untere Ecke des Gassacks, gehalten von dem Abspannmittel, im Laufe des Entfaltungsvorgangs auf die dem Fahrzeuginnenraum zugewandte Seite der C-Säulenverkleidung gelangen, so daß im Bereich der C-Säulenverkleidung Schutz für einen aufprallenden Fahrzeuginsassen besteht. Problematisch ist aber eine Anordnung eines Gurtaufrollers an der C-Säule, da eventuell das Abspannmittel während des Entfaltungsvorgangs behindert wird.

Mit der Erfindung soll der Entfaltungsvorgang des Gassacks erleichtert werden, ohne auf einen Schutz im Bereich der C-Säule zu verzichten.

Erfindungsgemäß ist hierzu ein Gassack-Modul für ein Fahrzeuginsassen-Rückhaltesystem vorgesehen, mit einem Gassack, der dafür vorgesehen ist, aus einem platzsparend zusammengefalteten Zustand in einen entfalteten Zustand überführt zu werden, in welchem er sich entlang der Innenseite wenigstens eines Teils der Seitenstruktur des Fahrzeugs erstreckt, mit wenigstens einem Abspannmittel, das dafür vorgesehen ist, den Gassack mit der Seitenstruktur des Fahrzeugs im Bereich dessen C-Säule zu verbinden, bei dem das Abspannmittel mit dem Gassack im Abstand von dessen der C-Säule zugeordneten Ende mit diesem verbunden ist. Unter einer Anbringung des Abspannmittels im Abstand von dem der C-Säule zugeordneten Ende des Gassacks wird hier eine Anordnung verstanden, bei der das Abspannmittel mit dem Gassack an einer Stelle verbunden ist, die mindestens um die halbe Länge des Abspannmittels von dem entsprechenden Ende des Gassacks entfernt ist. Ein solches Gassackmodul erleichtert die Entfaltung des Gassacks, da das der C-Säule zugeordnete Ende des Gassacks sich ohne Behinderung durch ein Abspannmittel frei über der C-Säule entfalten kann. Entgegen der herkömmlichen Meinung, nach der ein Gassack, um Schutz bei einem Seitenaufprall zu bieten, an seinen Ecken abgespannt sein muß, bietet das erfindungsgemäße Gassack-Modul überraschenderweise auch im Bereich des der C-Säule zugeordneten Endes Schutz bei einem Seitenaufprall. Im befüllten Zustand weist der Gassack eine gewisse Eigenstabilität auf, so daß sich das der C-Säule zugeordnete Ende auch beim Aufprall eines Fahrzeuginsassen nicht verschiebt. Da das der C-Säule zugeordnete Ende beim Aufprall eines Insassen zwischen dessen Kopf und der C-Säule liegt, ist der für eine Schutzwirkung erforderliche Gegenhalt auch ohne Abspannung der Ecken des Gassacks gegeben.

In Weiterbildung der Erfindung ist die Länge des Abspannmittels so bemessen, daß sich das nicht mit dem Gassack verbundene Ende, wenn der Gassack entfaltet ist, im Bereich des Gassacks befindet. Auf diese Weise kann eine kompakte Anordnung des Gasack-Moduls in einem Fahrzeug erreicht werden.

Gemäß einer weiterbildenden Maßnahme ist das Abspannmittel entfernt von der Unterkante mit dem Gassack verbunden. Unter einer Anbringung entfernt von der Unterkante des Gassacks wird hier eine Anordnung verstanden, bei der das Abspannmittel wenigstens um eine Breite des Abspannmittels oberhalb der Unterkante des Gassacks angeordnet ist. Auch diese Maßnahme beruht auf der überraschenden Erkenntnis, daß ein Gassack nicht an seinen Ecken abgespannt sein muß, um bei einem Seitenaufprall Schutz zu bieten, und sie schafft größere Freiheiten bei der Bemessung des Gassacks und der Anordnung des Abspannmittels.

Weiterhin wird eine Fahrzeug-Innenverkleidung mit einem erfindungsgemäßen Gassack-Modul vorgeschlagen, die eine Fahrzeugsäulenverkleidung aufweist, wobei der Gassack im zusammengefalteten Zustand außerhalb des von der Fahrzeugsäulenverkleidung abgedeckten Bereichs angeordnet ist, bei der zwischen dem zusammengefalteten Gassack und der Fahrzeugsäulenverkleidung eine auf die dem Fahrzeuginnenraum zugewandte Seite der Fahrzeugsäulenverkleidung führende Rampe angeordnet ist. Durch die zwischen dem zusammengefalteten Gassack und der Fahrzeugsäulenverkleidung angeordnete Rampe kann ein Bereich des Gassacks während seines Entfaltungsvorgangs, auch ohne durch ein Abspannmittel gehalten zu sein, auf die dem Fahrzeuginnenraum zugewandte Seite der Fahrzeugsäulenverkleidung gelangen. Da das Abspannmittel mit dem Gassack vor dessen der C-Säule zugeordneten Ende verbunden ist, kann sich der Gassack entfalten, ohne daß das Abspannmittel oder der Gassack durch die Fahrzeugsäulenverkleidung hindurchtreten muß. Dadurch kann ein einteiliger Aufbau der Fahrzeugsäulenverkleidung gewählt oder auf eine in der Fahrzeugsäulenverkleidung vorgesehene Reißlinie verzichtet werden, und es kann dennoch ein Schutz im Bereich der Fahrzeugsäulenverkleidung erreicht werden.

In Weiterbildung der Erfindung deckt die Fahrzeugsäulenverkleidung die C-Säule und das mit der C-Säule verbunden Ende des Abspannmittels ab, und das Abspannmittel tritt im entfalteten Zustand des Gassacks zwischen der C-Säulenverkleidung und der Fahrzeugsäule aus. Auf diese Weise kann der Gassack zu einem Punkt hinter der Fahrzeugsäulenverkleidung abgespannt werden, ohne daß eine zweiteilige Verkleidung erforderlich wäre. Während des Entfaltungsvorgangs des Gassacks schält sich das Abspannmittel zwischen Fahrzeugsäule und Fahrzeugsäulenverkleidung heraus.

Gemäß einer weiterbildenden Maßnahme ist der Gassack im zusammengefalteten Zustand zwischen der C-Säule und einer Innenraumverkleidung angeordnet, die an die Fahrzeugsäulenverkleidung anschließt und in einem der Rampe gegenüberliegenden Bereich flexibel ausgebildet ist. Dadurch kann der gefaltete Gassack für einen Fahrzeuginsassen unsichtbar angeordnet werden. Nach Aktivierung eines Gasgenerators tritt der Gassack geführt von der Rampe hinter der Innenraumverkleidung vor und gelangt auf die dem Fahrzeuginnenraum zugewandte Seite der Fahrzeugsäulenverkleidung.

Es ist ebenfalls vorteilhaft, wenn das mit der C-Säule verbundene Ende des Abspannmittels geringfügig oberhalb eines durch eine Türbrüstung festgelegten Niveaus und angrenzend an einen Fensterausschnitt der Seitenstruktur des Fahrzeugs angeordnet ist und das Abspannmittel im zusammengefalteten Zustand des Gassacks entlang dem Fensterausschnitt verlegt ist. Durch diese Maßnahmen bewegt sich das Abspannmittel während des Entfaltungsvorgangs nur an dem dem Fensterausschnitt zugewandten Rand der C-Säule, so daß an der C-Säule ein Gurtaufroller angeordnet werden kann, ohne daß das Abspannmittel und der Gassack beim Entfaltungsvorgang behindert würden.

Vorteilhafterweise verläuft im entfalteten Zustand des Gassacks ausgehend von dem mit dem Gassack verbundenen Ende des Abspannmittels eine Abspannlinie geringfügig oberhalb eines durch eine Türbrüstung des Fahrzeugs festgelegten Niveaus entlang dessen Seitenstruktur. Eine solche Anordnung der Abspannlinie gewährleistet einen Insassenschutz beim Überschlag des Fahrzeugs.

Weitere Merkmale und Vorteile der Erfindung ergeben sich aus der folgenden Beschreibung und aus der Zeichnung, auf die Bezug genommen wird. In der Zeichnung zeigen:
Figur 1 ein abschnittsweise und schematisch dargestelltes Gassack-Modul und eine Fahrzeug-Innenverkleidung nach dem Stand der Technik,
Figur 2 eine Prinzipskizze eines Schnitts einer C-Säule mit einem Gassack-Modul und einer Fahrzeug-Innenverkleidung nach dem Stand der Technik,
Figur 3 die abschnittsweise schematische Ansicht eines Gassack-Moduls und einer Fahrzeug-Innenverkleidung gemäß der Erfindung bei entfaltetem Gassack,
Figur 4 eine Prinzipskizze eines Schnitts einer C-Säule mit einem Gassack-Modul und einer Fahrzeug-Innenverkleidung gemäß der Erfindung,
Figur 5 eine detailliertere Ansicht des Gassack-Moduls und der Fahrzeug-Innenverkleidung der Figur 3 bei zusammengefaltetem Gassack,
Figur 6 eine Schnittansicht des Gassack-Moduls und der Fahrzeug-Innenverkleidung der Figur 3 entlang der Linie VI-VI bei zusammengefaltetem Gassack und
Figur 7 eine Schnittansicht des Gassack-Moduls und der Fahrzeug-Innenverkleidung der Figur 3 entlang der Linie VI-VI bei entfaltetem Gassack.

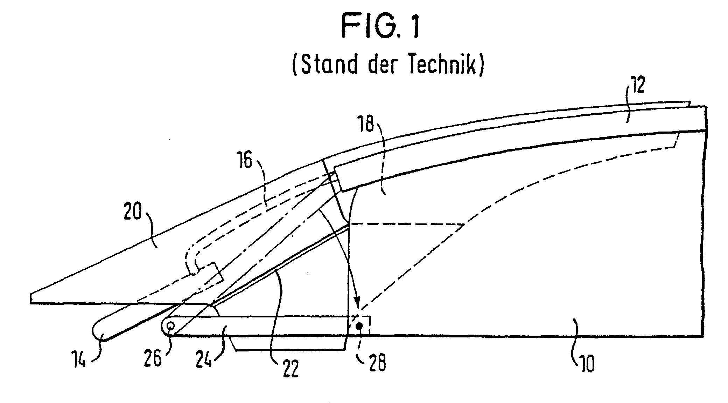

Das in Figur 1 schematisch dargestellte Gassack-Modul nach dem Stand der Technik weist einen im entfalteten Zustand dargestellten Gassack 10, ein Gehäuse 12 zur Aufnahme des Gassacks 10 im gefalteten Zustand und einen Gasgenerator 14 zum Aufblasen des Gassacks 10 auf. Der Gasgenerator 14 ist über eine Zuleitung 16 mit dem Gehäuse 12 verbunden. Der Gasgenerator 14 ist im Bereich einer Fahrzeug-C-Säule 18 angeordnet, die zum Fahrzeuginnenraum hin mit einer C-Säulenverkleidung 20 verkleidet ist. Hinter dem Gassack 10 bzw. der C-Säulenverkleidung 20 liegende Teile sind gestrichelt dargestellt. Die C-Säulenverkleidung 20 ist mit einer Reißlinie 22 versehen, die in dem gezeigten Zustand bei entfaltetem Gassack 10 bereits aufgetrennt ist. Die C-Säulenverkleidung 20 ist im Verlauf des Entfaltungsvorgangs des Gassacks 10 von einem Abspannmittels 24 durchtrennt worden, das als Abspannband ausgebildet ist und sich aus seiner strichpunktiert dargestellten Ausgangslage in seine Endlage, parallel zur Unterkante des Gassacks 10, bewegt hat. Anstelle eines Abspannbandes könnte auch ein Abspannmittels mit einem kreisförmigen Querschnitt verwendet werden.

Das Abspannband 24 beschreibt während des Entfaltungsvorgangs des Gassacks 10 eine im wesentlichen kreisförmige Bewegung um einen ersten fahrzeugfesten Punkt 26, wie durch einen Pfeil angedeutet ist. Am Gassack 10 ist das Abspannband 24 an einem ersten Abspannpunkt 28 an einer hinteren unteren Ecke des Gassacks befestigt. Ein zweiter fahrzeugfester Punkt (nicht dargestellt) liegt an einer Fahrzeug-A-Säule und ist über ein zweites Abspannband (nicht dargestellt) mit einer vorderen unteren Ecke des Gassacks 10 verbunden, so daß die gesamte Fläche des Gassacks 10 entlang der Seitenstruktur des Fahrzeugs gespannt ist.

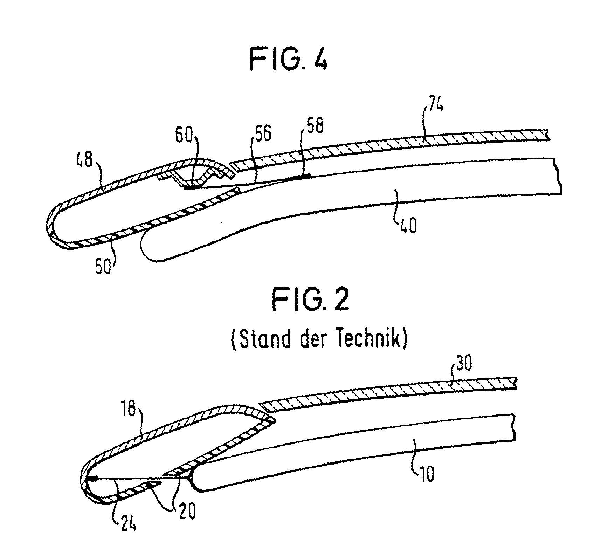

In der Figur 2 ist schematisch die C-Säule 18 und die Seitenscheibe 30 eines Fahrzeugs dargestellt. Zum Fahrzeuginnenraum hin wird die C-Säule 18 durch die C-Säulenverkleidung 20 abgedeckt. Ebenfalls dargestellt ist der entfaltete Gassack 10, der durch das Abspannband 24 mit der C-Säule 18 verbunden ist. Um bei einem Seitenaufprall einen Schutz eines Fahrzeuginsassen im Bereich der C-Säule 18 zu gewährleisten, muß der Gassack 10, wie in der Figur 1 und der Figur 2 dargestellt, im aufgeblasenen Zustand wenigstens einen Teil der C-Säule 18 abdecken. Dies wird beim in der Figur 2 dargestellten Stand der Technik durch das an der hinteren unteren Ecke des Gassacks 10 befestigte Abspannband 24 erreicht, das den Gassack 10 während seines Entfaltungsvorgangs und im aufgeblasenen Zustand im Bereich der C-Säule 18 hält. Wie in der Figur 2 gut zu erkennen ist, muß hierzu die C-Säulenverkleidung 20 zweiteilig sein oder mit einer Reißlinie versehen sein, so daß der Gassack 10 und/oder das Abspannband 24 durch die C-Säulenverkleidung 20 hindurchtreten können.

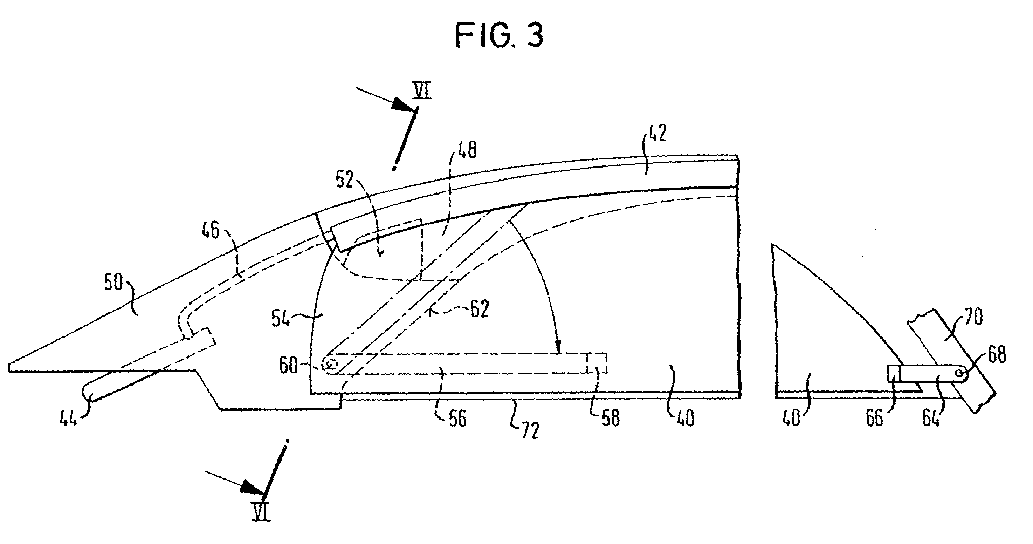

Das in der Figur 3 dargestellte erfindungsgemäße Gassack-Modul ist mit einem Gassack 40, einem Gehäuse 42 zur Aufnahme des Gassacks 40 in gefaltetem Zustand und einem Gasgenerator 44 versehen. Auch in der Figur 3 sind verdeckte Teile durch gestrichelte Linien angedeutet, so die Zuleitung 46, die den Gasgenerator 44 mit dem Gehäuse 42 verbindet. Eine C-Säule 48 ist gegen einen Fahrzeuginnenraum mit einer C-Säulenverkleidung 50 verkleidet. Das Gehäuse 42 ist oberhalb der C-Säulenverkleidung 50 angeordnet, und eine Rampe 52 dient dazu, den Gassack 40 während seines Entfaltungsvorgangs von dem Gehäuse 42 auf die dem Fahrzeuginnenraum zugewandte Seite der C-Säulenverkleidung 50 zu leiten. Dadurch gelangt ein Eckbereich des Gassacks 40 im Verlauf des Entfaltungsvorgangs vor die C-Säulenverkleidung 50. Das der C-Säule zugeordnete Ende 54 des Gassacks 40 liegt im entfalteten Zustand auf der C-Säulenverkleidung 50. Ein Abspannband 56 verbindet einen am Gassack 40 angeordneten ersten Abspannpunkt 58 mit einem an der C-Säule 48 angeordneten ersten fahrzeugfesten Punkt 60. Der erste Abspannpunkt 58 ist um die halbe Länge des Abspannbandes 56 von dem der C-Säule 48 zugeordneten Ende 54 des Gassacks 40 entfernt und um eine Breite des Abspannbandes 56 oberhalb der Unterkante des Gassacks 40 angeordnet. Das der C-Säule zugeordnete Ende 54 des Gassacks 40 bewegt sich dadurch während des Entfaltungsvorgangs ohne Behinderung frei über die C-Säulenverkleidung 50. Im befüllten Zustand des Gassacks wird das der C-Säule zugeordnete Ende 54 des Gassacks dann durch die Eigenstabilität des befüllten Gassacks 40 in der gezeigten Position über der C-Säulenverkleidung 50 gehalten. Die Ausgangslage des Abspannbandes 56 bei im Gehäuse 42 gefalteten Gassack 40 ist strichpunktiert dargestellt. Das Abspannband 56 legt im Verlauf des Entfaltungsvorgangs eine im wesentlichen kreisförmige Bahn um den ersten fahrzeugfesten Punkt 60 zurück, wie durch einen Pfeil angedeutet ist. Dabei schält sich das Abspannband 56 zwischen der C-Säule 48 und der C-Säulenverkleidung 50 an deren Kontaktlinie 62 heraus. In der Figur 3 ebenfalls angedeutet ist ein vorderer Bereich des Gassacks 40, der über ein zweites Abspannband 64, das an dem Gassack 40 an einem zweiten Abspannpunkt 66 befestigt ist, mit einem zweiten fahrzeugfesten Punkt 68 an einer A-Säule 70 verbunden ist. Damit ergibt sich eine Abspannlinie des Gassacks 40 vom ersten Abspannpunkt 48 zum zweiten Abspannpunkt 66, die nur geringfügig oberhalb einer angedeuteten Türbrüstung 72 liegt.

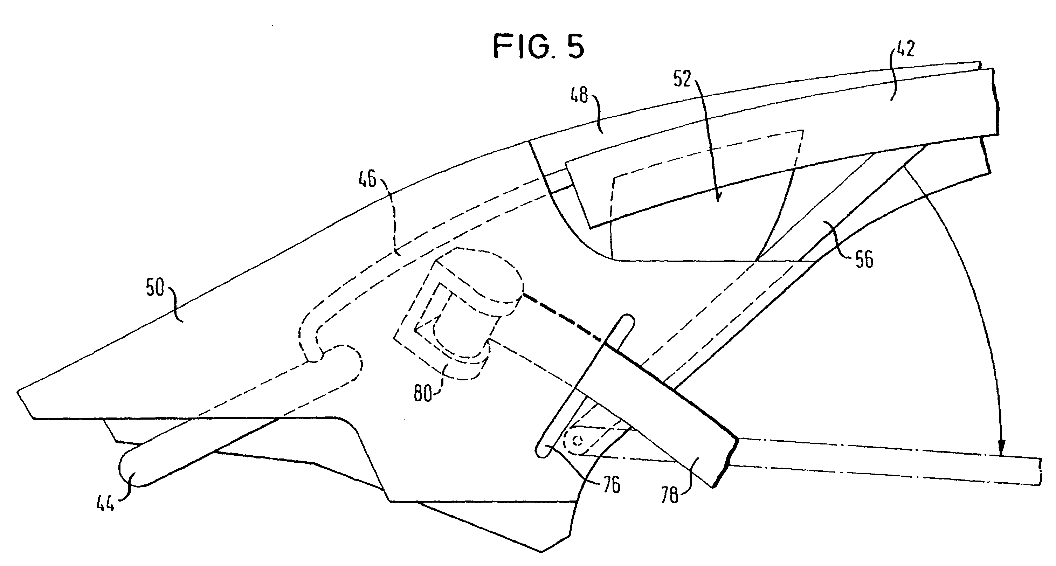

Zur Verdeutlichung dient auch die Prinzipskizze der Figur 4. Die C-Säule 48 schließt dort an eine Seitenscheibe 74 an. Zum Fahrzeuginnenraum hin ist die C-Säule 48 mit der C-Säulenverkleidung 50 verkleidet. Der entfaltete Gassack 40 deckt einen Teil der C-Säulenverkleidung 50 ab und bietet einem Fahrzeuginsassen damit Schutz bei einem Seitenaufprall. Gehalten wird der Gassack 40 durch das Abspannband 56, das sich von dem ersten fahrzeugfesten Punkt 60 zu dem ersten Abspannpunkt 58 am Gassack 40 erstreckt. Das Abspannband 56 tritt dabei zwischen C-Säulenverkleidung 50 und C-Säule 48 aus. Die C-Säulenverkleidung 50 kann dadurch vereinfacht einteilig und ohne Reißlinie ausgeführt werden, da sich das Abspannband 56 während des Entfaltungsvorgangs des Gassacks 40 an der Kontaktlinie zwischen C-Säule 48 und C-Säulenverkleidung 50 herausschält.

Figur 5 zeigt eine detailliertere Darstellung des in der Figur 3 dargestellten Gassack-Moduls. Im Unterschied zur Figur 3 ist das Gassack-Modul mit gefaltetem Gassack dargestellt. Umrisse von in der Draufsicht der Figur 5 verdeckten Bauteilen sind gestrichelt dargestellt. Der Gassack befindet sich im gefalteten Zustand in dem Gehäuse 42, das über die Leitung 46 mit dem Gasgenerator 44 in Verbindung steht. Teile des Gasgenerators 44 und der Leitung 46 sind durch die C-Säulenverkleidung 50 verdeckt. Die Rampe 52 führt von dem Gehäuse 42 auf die dem Fahrzeuginnenraum zugewandte Seite der C-Säulenverkleidung 50. Die Rampe 52 ist an der C-Säule 48 befestigt. Das Abspannband 56 ist, wie dargestellt, im gefalteten Zustand des Gassacks entlang dem Fensterausschnitt verlegt. Die Bewegung des Abspannbandes 56 bei der Entfaltung des Gassacks ist in der Figur 5 durch einen Pfeil dargestellt, und die Endlage des Abspannbandes 56 bei vollständig entfaltetem Gassack ist strichpunktiert gezeigt. Die C-Säulenverkleidung 50 ist außerdem mit einem Langloch 76 versehen, das für den Durchtritt eines Gurtbandes 78 vorgesehen ist. Das Gurtband 78 ist einem an der C-Säule 48 angeordneten Gurtaufroller 80 zugeordnet, der hinter der C-Säulenverkleidung 50 angeordnet und daher in der Figur 5 gestrichelt dargestellt ist. Das Abspannband 56 liegt sowohl im zusammengefalteten als auch im entfalteten Zustand des Gassacks vom Innenraum des Fahrzeugs aus gesehen hinter dem Gurtband 78. Die Bewegung des Abspannbandes 56 während des Entfaltungsvorgangs wird daher durch das Gurtband 78 nicht behindert.

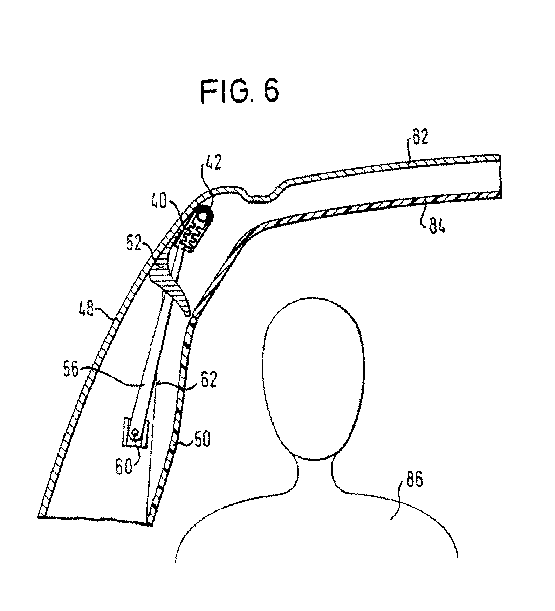

Die Schnittansicht der Figur 6 dient zur Verdeutlichung der Einbauverhältnisse des erfindungsgemäßen Gassack-Moduls und der erfindungsgemäßen Fahrzeug-Innenverkleidung und zeigt abschnittsweise die C-Säule 48, die in einen Dachbereich 82 übergeht. Zum Fahrzeuginnenraum hin ist die C-Säule 48 mit der C-Säulenverkleidung 50 verkleidet. C-Säule 48 und C-Säulenverkleidung 50 stoßen angrenzend an einen Fensterausschnitt an der Kontaktlinie 62 aneinander. An die C-Säulenverkleidung 50 schließt sich eine Dachhimmelverkleidung 84 an. Hinter der Dachhimmelverkleidung 84 ist das Gehäuse 42 mit dem darin gefalteten Gassack 40 angeordnet. Das Abspannband 56 ist von dem im Gehäuse 42 gefalteten Gassack 40 zu dem ersten fahrzeugfesten Punkt 60 an der C-Säule 48 verlegt. Die Rampe 52 führt an eine Kontaktlinie zwischen C-Säulenverkleidung 50 und Dachhimmelverkleidung 84. Im Fahrzeuginnenraum ist schematisch ein Fahrzeuginsasse 86 dargestellt.

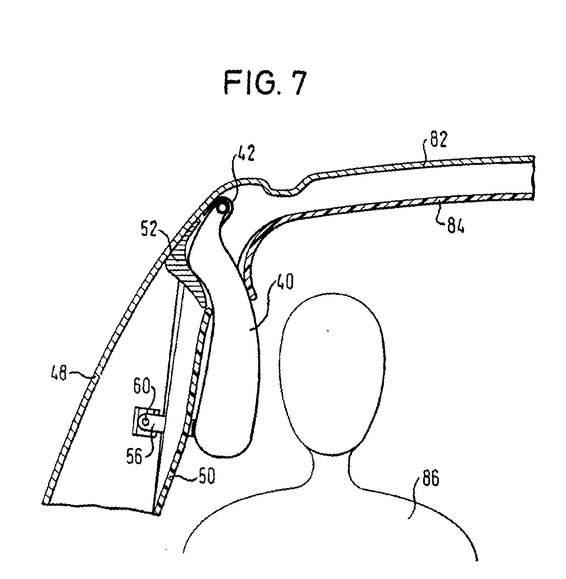

Figur 7 zeigt das Gassack-Modul und die Fahrzeug-Innenverkleidung der Figur 6 bei entfaltetem Gassack 40. Durch die Rampe 52 ist der Gassack 40 von dem Gehäuse 42 auf die dem Fahrzeuginnenraum zugewandte Seite der C-Säulenverkleidung 50 geführt worden und liegt damit zwischen dem Kopf des Fahrzeuginsassen 86 und der C-Säulenverkleidung 50. Wie Figur 7 zu entnehmen ist, ist die Dachhimmelverkleidung 84 in einem der Rampe 52 gegenüberliegenden Bereich flexibel ausgebildet und ermöglicht damit das Austreten des Gassacks 40 in den Fahrzeuginnenraum. Im Verlauf des Entfaltungsvorgangs hat sich das Abspannband 56 zwischen der C-Säule 48 und der C-Säulenverkleidung 50 herausgeschält. Während der durch die Rampe 52 auf die dem Fahrzeuginnenraum zugewandte Seite der C-Säulenverkleidung 50 geführte Gassackbereich dem Insassen 86 Schutz im Bereich der C-Säule 48 bietet, bewirkt das Abspannband 56 zusammen mit dem Gassack 40 und dem in Figur 3 dargestellten vorderen Abspannband 64 eine Abspannung des Gassacks, die einen Schutz des Insassen 86 auch bei einem Fahrzeugüberschlag ermöglicht.

## Patentansprüche

1. Gassack-Modul für ein Fahrzeuginsassen-Rückhaltesystem, mit einem Gassack (40), der dafür vorgesehen ist, aus einem platzsparend zusammengefalteten Zustand in einen entfalteten Zustand überführt zu werden, in welchem er sich entlang der Innenseite wenigstens eines Teils der Seitenstruktur des Fahrzeugs erstreckt, mit wenigstens einem Abspannmittel (56), das dafür vorgesehen ist, den Gassack (40) mit der Seitenstruktur des Fahrzeugs im Bereich dessen C-Säule (48) zu verbinden, **dadurch gekennzeichnet, daß** das Abspannmittel (56) mit dem Gassack (40) im Abstand von dessen der C-Säule (48) zugeordneten Ende (54) mit diesem verbunden ist.

2. Gassack-Modul nach Anspruch 1, **dadurch gekennzeichnet, daß** die Länge des Abspannmittels (56) so bemessen ist, daß sich das nicht mit dem Gassack (40) verbundene Ende, wenn der Gassack (40) entfaltet ist, im Bereich des Gassacks (40) befindet.

3. Gassack-Modul nach Anspruch 1 oder Anspruch 2, **dadurch gekennzeichnet, daß** das Abspannmittel (56) entfernt von der Unterkante des Gassacks (40) mit diesem verbunden ist.

4. Fahrzeug-Innenverkleidung mit einem Gassack Modul nach einem der vorstehenden Ansprüche und mit einer Fahrzeugsäulenverkleidung (50), wobei der Gassack (40) im zusammengefalteten Zustand außerhalb des von der Fahrzeugsäulenverkleidung (50) abgedeckten Bereichs angeordnet ist, **dadurch gekennzeichnet, daß** zwischen dem zusammengefalteten Gassack (40) und der Fahrzeugsäulenverkleidung (50) eine auf die dem Fahrzeuginnenraum zugewandte Seite der Fahrzeugsäulenverkleidung (50) führende Rampe (52) angeordnet ist.

5. Fahrzeug-Innenverkleidung nach Anspruch 4, **dadurch gekennzeichnet, daß** die Fahrzeugsäulenverkleidung (50) die C-Säule (48) und das mit der C-Säule (48) verbundene Ende des Abspannmittels (56) abdeckt und das Abspannmittel (56) im entfalteten Zustand des Gassacks (40) zwischen C-Säulenverkleidung (50) und C-Säule (48) austritt.

6. Fahrzeug-Innenverkleidung nach Anspruch 4 oder 5, **dadurch gekennzeichnet, daß** der Gassack (40) im zusammengefalteten Zustand zwischen der C-Säule (48) und einer Innenraumverkleidung (84) angeordnet ist, die an die Fahrzeugsäulenverkleidung (50) anschließt und in einem der Rampe (52) gegenüberliegenden Bereich flexibel ausgebildet ist.

7. Fahrzeug-Innenverkleidung nach einem der Ansprüche 4 bis 6, **dadurch gekennzeichnet, daß** das mit der C-Säule (48) verbundene Ende des Abspannmittels (56) geringfügig oberhalb eines durch eine Türbrüstung (72) festgelegten Niveaus und angrenzend an einen Fensterausschnitt der Seitenstruktur des Fahrzeugs angeordnet ist und das Abspannmittel (56) im zusammengefalteten Zustand des Gassacks (40) entlang dem Fensterausschnitt verlegt ist.

8. Fahrzeug-Innenverkleidung nach einem der Ansprüche 4 bis 7, **dadurch gekennzeichnet, daß** ausgehend von dem mit dem Gassack (40) verbundenen Ende des Abspannmittels (56) im entfalteten Zustand des Gassacks (40) eine Abspannlinie geringfügig oberhalb eines durch eine Türbrüstung (72) des Fahrzeugs festgelegten Niveaus entlang dessen Seitenstruktur verläuft.

9. Fahrzeug-Innenverkleidung nach Anspruch 8, **dadurch gekennzeichnet, daß** das mit dem Gassack (40) verbundene Ende des Abspannmittels (56) im entfalteten Zustand des Gassacks (40) geringfügig oberhalb des durch die Türbrüstung (72) festgelegten Niveaus und mittig zu einer an die Türbrüstung (72) angrenzenden Berandung eines Fensterauschnitts liegt.

## Claims

1. A gas bag module for a vehicle occupant restraint system, comprising a gas bag (40) provided for being translated from a space-saving folded condition into a deployed condition in which it extends along the inner side of at least part of the side structure of the vehicle, and comprising at least one tensioning means (56) provided to connect the gas bag (40) to the side structure of the vehicle in the region of its C-column (48), **characterized in that** said tensioning means (56) is connected to said gas bag (40) spaced away from its end (54) assigned to said C-column (48).

2. The gas bag module as set forth in claim 1, **characterized in that** the length of said tensioning means (56) is dimensioned such that the end not connected to said gas bag (40) when said gas bag (40) is deployed is located in the region of said gas bag (40).

3. The gas bag module as set forth in claim 1 or claim 2, **characterized in that** said tensioning means (56) is connected to said gas bag (40) remote from the bottom edge thereof.

4. A vehicle interior lining comprising a gas bag module as set forth in any of the preceding claims and comprising a vehicle column lining (50), said gas bag (40) being arranged in the folded condition outside of the region covered by said vehicle column lining (50), **characterized in that** a ramp (52) leading to the side of said vehicle column lining (50) facing the vehicle interior is arranged between said folded gas bag (40) and said vehicle column lining (50).

5. The vehicle interior lining as set forth in claim 4, **characterized in that** said vehicle column lining (50) covers said C-column (48) and the end of said tensioning means (56) connected to said C-column (48), and that said tensioning means (56) emerges in the deployed condition of said gas bag (40) between said C-column lining (50) and said C-column (48).

6. The vehicle interior lining as set forth in claim 4 or 5, **characterized in that** said gas bag (40) is arranged in the folded condition between said C-column (48) and an interior space lining (84) which adjoins said vehicle column lining (50) and is configured to be flexible in a region opposite said ramp (52).

7. The vehicle interior lining as set forth in any of the claims 4 to 6, **characterized in that** the end of said tensioning means (56) connected to said C-column (48) is arranged slightly above a level defined by a door breast (72) and adjoining a window cutout in said side structure of said vehicle, and that said tensioning means (56) in the folded condition of said gas bag (40) is installed along said window cutout.

8. The vehicle interior lining as set forth in any of the claims 4 to 7, **characterized in that** starting from the end of said tensioning means (56) connected to said gas bag (40) in the deployed condition of said gas bag (40), a tensioning line runs slightly above a level defined by a door breast (72) of said vehicle along said side structure thereof.

9. The vehicle interior lining as set forth in claim 8, **characterized in that** the end of said tensioning means (56) connected to said gas bag (40) is located in the deployed condition of said gas bag (40) slightly above said level defined by said door breast (72) and in the middle of a rim of a window cutout adjoining said door breast (72).

## Revendications

1. Module de coussin à gaz pour un système de retenue de passagers, comprenant un coussin à gaz (40) qui est prévu pour être amené depuis un état replié peu encombrant dans un état déployé dans lequel il s'étend le long de la face intérieure d'au moins une partie de la structure latérale du véhicule, au moins moyen de haubanage (56) qui est prévu pour relier le coussin à gaz (40) à la structure latérale du véhicule dans la zone de sa colonne C (48), **caractérisé en ce que** le moyen de haubanage (56) est relié au coussin à gaz (40) à distance de son extrémité (54) associée à la colonne C (48).

2. Module de coussin à gaz selon la revendication 1, **caractérisé en ce que** la longueur du moyen de haubanage (56) est dimensionnée de telle façon que l'extrémité qui n'est pas reliée au coussin à gaz (40) se trouve dans la région du coussin à gaz (40) lorsque le coussin à gaz (40) est déployé.

3. Module de coussin à gaz selon la revendication 1 ou la revendication 2, **caractérisé en ce que** le moyen de haubanage (56) est relié au coussin à gaz (40) en éloignement de l'arête inférieure du coussin à gaz (40).

4. Revêtement intérieur de véhicule comportant un module de coussin à gaz selon l'une quelconque des revendications précédentes et un revêtement de colonne de véhicule (50), le coussin à gaz (40) étant agencé, à l'état replié, en dehors de la zone recouverte par le revêtement de colonne de véhicule (50), **caractérisé en ce qu'**une rampe (52), menant vers le côté du revêtement de colonne de véhicule (50) qui est tourné vers l'intérieur du véhicule, est agencée entre le coussin à gaz (40) replié et le revêtement de colonne de véhicule (50).

5. Revêtement intérieur de véhicule selon la revendication 4, **caractérisé en ce que** le revêtement de colonne de véhicule (50) recouvre la colonne C (48) et l'extrémité du moyen de haubanage (56) qui est reliée à la colonne C (48), et **en ce que** le moyen de haubanage (56) sort entre le revêtement de colonne de véhicule (50) et la colonne C (48) lorsque le coussin à gaz est à l'état déployé.

6. Revêtement intérieur de véhicule selon la revendication 4 ou 5, **caractérisé en ce que** le coussin à gaz (40) est agencé, à l'état replié, entre la colonne C (48) et un revêtement d'intérieur (84) qui se raccorde au revêtement de colonne de véhicule (50) et qui est réalisé de manière flexible dans une zone opposée à la rampe (52).

7. Revêtement intérieur de véhicule selon l'une quelconque des revendications 4 à 6, **caractérisé en ce que** l'extrémité du moyen de haubanage (56) reliée à la colonne C (48) est installée légèrement en dessus d'un niveau défini par un appui de portière (72) et de manière adjacente à une ouverture de fenêtre de la structure latérale du véhicule et **en ce que** le moyen de haubanage (56) est monté le long de l'ouverture de fenêtre lorsque le coussin à gaz (40) est à l'état replié.

8. Revêtement intérieur de véhicule selon l'une quelconque des revendications 4 à 7, **caractérisé en ce que** partant de l'extrémité du moyen de haubanage (56) reliée au coussin à gaz (40) à l'état déployé du coussin à gaz (40), une ligne de haubanage s'étend légèrement en dessus d'un niveau défini par un appui de portière (72) du véhicule, le long de sa structure latérale.

9. Revêtement intérieur de véhicule selon la revendication 8, **caractérisé en ce que** l'extrémité du moyen de haubanage (56) reliée au coussin à gaz (40) se trouve, à l'état déployé du coussin à gaz (40), légèrement en dessus du niveau défini par l'appui de portière (72) et au milieu d'un bord d'une ouverture de fenêtre qui est adjacent à l'appui de portière (72).
